# EUROPEAN PATENT SPECIFICATION

(11) **EP 2 615 548 B1**
(45) Date of publication and mention of the grant of the patent: **28.12.2016**
(21) Application number: 10856925.2
(22) Date of filing: 08.09.2010
(51) Int. Cl.: G06F 9/52, G06F 11/18, G06F 11/16

(54) **COMPUTING DEVICE**
RECHNERVORRICHTUNG
DISPOSITIF INFORMATIQUE

(43) Date of publication of application: 17.07.2013
(73) Proprietor: Hitachi, Ltd., Chiyoda-ku Tokyo 100-8280 (JP)
(72) Inventor: TAKADA, Aritoki, Tokyo 100-8220 (JP)
(74) Representative: Moore, Graeme Patrick
(86) International application number: PCT/JP2010/005493
(87) International publication number: WO 2012/032572

(56) References cited:
- EP-A2- 1 283 468
- JP-A- 5 165 793
- JP-A- 6 282 448
- JP-A- 2009 217 503
- JP-A- 2010 128 664
- US-A1- 2005 223 274
- US-A1- 2008 196 037

## Description

### TECHNICAL FIELD

The present invention relates to a computer.

### BACKGROUND ART

To elongate the system operation time in a computer system, there exists a technique to multiplex computers. Also, as a computer to minimize system downtime, there exists a fault tolerant computer (reference is to be made to patent literature 1).

In a dual system and/or a fault tolerant system, there is a technique called "lock-step" in which for a processor processing step for an input/output or the like, computers communicate the contents with each other at each execution thereof, to execute the same processing in a synchronized fashion (namely, in a concurrent fashion).

On the other hand, recently, with speedup of networks and generalization of computers, there has been developed a technique to connect a plurality of computers to each other by use of general hardware and networks, not dedicated hardware. As a fault tolerant system using the technique, a system of "virtual-machine synchronization" has been proposed. In this system, operating systems and application software under consideration are executed on a virtual computer, and an input to the virtual computer and an operation of the virtual computer are transferred to a second virtual computer, to reproduce the operation on the virtual computer (reference is to be made to patent literature 2).

### CITATION LIST

### PATENT LITERATURE

PATENT LITERATURE 1: JP-A- 8-314744
PATENT LITERATURE 2: US2010/0107158
PATENT LITERATURE 3: US2008/196037 discloses a Process for Maintaining Execution Synchronization Between Several Asynchronous Processors Working in Parallel and in a Redundant Manner
PATENT LITERATURE 4: EP1283468 discloses a Central Unit for a Redundant Automation System
PATENT LITERATURE 5: JP2009217503 discloses a Computer System, Computer Control Method, and Computer Control Program

### SUMMARY OF INVENTION

### TECHNICAL PROBLEM

In the "lock-step" system described above, operations coincide with each other between computers for each operation step of the processor and it is required for dedicated hardware to observe and to control processor operation steps. However, recently, as consolidation and high integration of a processor and peripheral chip sets have become conspicuous, it is difficult to observe and to control operation steps of such processor.

Further, since the "lock-step" system executes synchronized processing between nodes for each input/output of the processor, there arises a problem in which when the operation clock of the processor is enhanced, overhead becomes larger due to the synchronized processing.

On the other hand, the "virtual-machine synchronization" system observes inputs to the computer at precision in units of processor operation steps of the virtual computer and reproduces operation on a second virtual computer, to thereby reproduce the same operation. This is implemented on the assumption that if the contents and timing of inputs are the same, the operations at observation and at reproduction are the same. However, when the virtual processor includes a plurality of processors, the operation sequence varies at observation and at reproduction between processors; hence, even if the inputs are completely equal with each other, the same operations are not conducted depending on cases. Therefore, this method cannot be applied to the situation in which a plurality of processors are employed.

In this situation, there is provided a technique in which even when a plurality of tasks concurrently operate and influence each other by use of a plurality of processors, the synchronized processing is possible with low overhead, without using dedicated hardware.

### SOLUTION TO PROBLEM

A computer is connected to at least one other computer. A processor of the computer transmits, when processing an input or output request in a task that the processor is executing, a request notification including an identifier of the computer, an identifier of the task, and an identifier of an access target of the request to the other computer and receives from the other computer a request notification transmitted by the other computer. The processor stores in a memory the contents of the received request notification and then compares, based on the contents of the request notification stored in the memory, the request that the processor is trying to process with the request that the processor of the other computer is trying to process. And based on a result of the comparison, the processor determines whether or not it is possible to process the request that the processor is trying to process. The present invention provides a computer as set forth in claim 1.

### ADVANTAGEOUS EFFECTS OF INVENTION

In a situation in which a plurality of tasks concurrently operate and influence each other, it is possible to execute the synchronized processing with low overhead without using dedicated hardware.

### BRIEF DESCRIPTION OF DRAWINGS

FIG. 1 is a diagram showing a configuration example of a fault tolerant system;
FIG. 2 is a flowchart showing an example of a flow for a processor to execute a task;
FIG. 3 is a flowchart showing an example of a flow for a processor to execute synchronization for input/output operations;
FIG. 4 is a diagram showing an example of the contents of an input/output request;
FIG. 5 is a diagram showing an example of the contents of an input/output request table;
FIG. 6 is a diagram showing an example of the contents of an input/output request notification;
FIG. 7 is a flowchart showing an example of a flow to judge executability of a task;
FIG. 8 is a diagram showing another example of the input/output request table;
FIG. 9 is a diagram showing another example of the input/output request notification;
FIG. 10 is a flowchart showing another example of a flow to determine executability of a task;
FIG. 11 is a diagram showing a configuration example of platform software to implement detection and separation of an abnormal computer node;
FIG. 12 is a diagram showing an example of computer node management processing;
FIG. 13 is a diagram showing an example of a computer node management table;
FIG. 14 is a diagram showing an example of a task management table;
FIG. 15 is a flowchart showing another example of a flow for a processor to execute synchronization for input/output operations;
FIG. 16 is a diagram showing another example of the input/output request table;
FIG. 17 is a diagram showing another example of the contents of an input/output request notification;
FIG. 18 is a flowchart showing an example of a flow for a processor in a leader to execute synchronization for input/output operations;
FIG. 19 is a flowchart showing an example of a flow for a processor in a follower to execute synchronization for input/output operations;
FIG. 20 is a diagram showing an example of the contents of a followability notification; and
FIG. 21 is a diagram showing an example of a followability table.

### DESCRIPTION OF EMBODIMENTS

Description will be given in detail of embodiments of the present invention by referring to the drawings. First, a first embodiment as a basic mode of the present invention will be described. Thereafter, description will be given of differences between the first embodiment and a second embodiment in which the task execution condition is mitigated, a third embodiment in which a measure for a computer node abnormality is added, and a fourth embodiment in which an idea to mitigate the overhead due to the notification between computer nodes is added.

### ---- FIRST EMBODIMENT ----

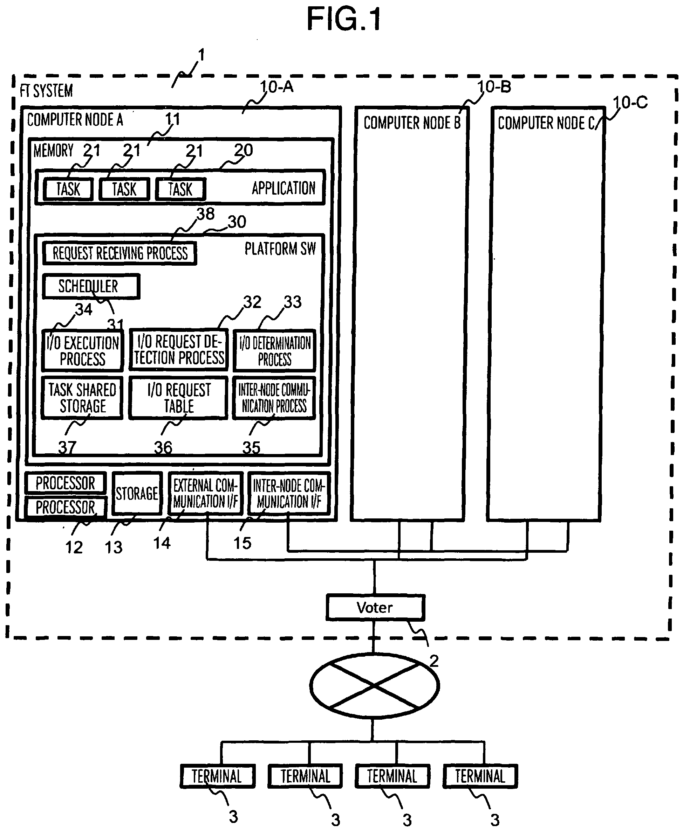

FIG. 1 is a configuration diagram of a fault tolerant system in the present embodiment. The fault tolerant system 1 includes at least two computer nodes 10 and a voter 2. Although FIG. 1 includes three computer nodes 10-A, 10-B, and 10-C, the present invention is not restricted by the situation including three computer nodes. The fault tolerant system 1 conducts input/output operations via the voter 2 with at least one terminal 3 outside the fault tolerant system 1. The voter 2 at least includes a function to distribute an input from the terminal 3 to each computer node 10 and a function, associated with an output to the terminal 3, to receive an output from each computer node 10 and to transfer the output to the terminal 3. At transfer of the output to the terminal 3, the voter 2 selects appropriate one of the outputs obtained from the respective computer nodes 10 by use of a method such as decision by majority, to transfer the output thereto. It is also possible to employ a multiplex configuration including a plurality of voters 2; also, the voter 2 may be installed as a function of each computer node 10.

Each computer node 10 at least includes one memory 11, at least one processor 12, and a inter-node communication interface 15. The computer nodes 10 in the fault tolerant system 1 are connected to each other via the inter-node communication interface 15.

In addition, the computer node 10 may include a storage 13and an external communication interface 14 in the computer node 10. Further, the inter-node communication interface 15 may also serve the function of the external communication interface 14. However, the presence or absence of the storage 13 and the external communication interface 14 equally applies to all computer nodes 10 in the fault tolerant system.

The memory 11 at least includes application software 20 and platform software 30. The application software 20 includes at least one task 21. The tasks 20 constituting the application software 20 are the same in all computer nodes 10 configuring the fault tolerant system 1. The platform software 30 is a multitask executable operating system capable of executing a plurality of tasks 21 and at least includes a scheduler 31, input/output (I/O) request detection process 32, input/output determination process 33, input/output execution process 34, inter-node communication process 35, an input/output request table 36, and request receiving process 38. Additionally, the platform software (S/W) 30 may include a task shared storage 37.

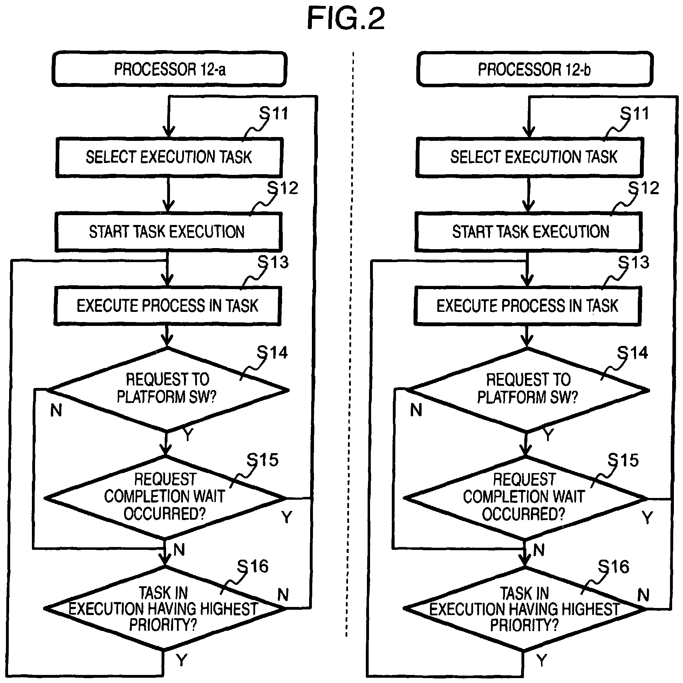

FIG. 2 shows an operation of the processor 12 based on the tasks 21 in the application software 20 and the scheduler 31 in the platform software 30.

First, the processor 12 executes processing of the scheduler 31 to select one from the at least one task 21 for execution thereof (S11). The processor 12 starts execution of the task 21 (S12). The processor 12 sequentially executes part of the processing described as the task 21 (S13). The processing in the task 21 also includes reservation and release of the memory, input/output processing, and the like which call functions of the platform software 30. Since the entity of such processing exists in the platform software 30, it is described in the task 21 only as a request issuance for a particular function in the request receiving process 38. In such situation in which the processing in the task 21 is a request to the platform software 30 (S14), if the processing associated with the request is not immediately completed (S15), the processor 12 again executes the processing of the scheduler 31 to select and to execute another task 21. In a situation in which the processing is other than the request to the platform software 30; or, even in a situation in which the processing associated with the request in the platform software 30 is immediately completed, if the task 21 in execution is other than a task having the highest priority (S16), the processor 12 again executes the processing of the scheduler 31 to select and to execute another task 21. The situation which is described above and in which the task 21 in execution is other than a task having the highest priority is for example, a situation in which the consecutive execution time of the task 21 in execution is equal to or more than a predetermined value or a situation in which another task 21 having the higher priority is executable. If the task 21 in execution has the highest priority, the subsequent processing of the task 21 is executed (S 13). These operations are, if the computer node 10 includes a plurality of processors 12, respectively executed by the respective processors 12. Operations of the respective processors 12 are, in principle, independent of each other.

Since the present fault tolerant system 1 does not conduct the lock-step between the computer nodes 10, it is not possible that the operations of the respective processors completely coincide with each other between the respective computer nodes 10. This may be because of, for example, the difference in the operation timing due to the difference in cache operations in the processors and/or the difference in operations of the platform software 30 due to the difference in the internal state of the platform software 30. On the other hand, in the implementation of the fault tolerant system 1, any fatal difference in operation is not tolerable between the computer nodes 10 in association with the application software 20. The fatal difference in operation occurs in, for example, a situation in which between the computer nodes 10, a conditional judgment in each task 21 leads to a different result between the computer nodes 10 and different processing is hence executed or a situation in which an output associated with the application software varies between the computer nodes 10. To prevent this event, the present invention adopts, in addition to the delivery of external input data to each computer node 10 by the voter 2, a configuration and operation, which will be described later.

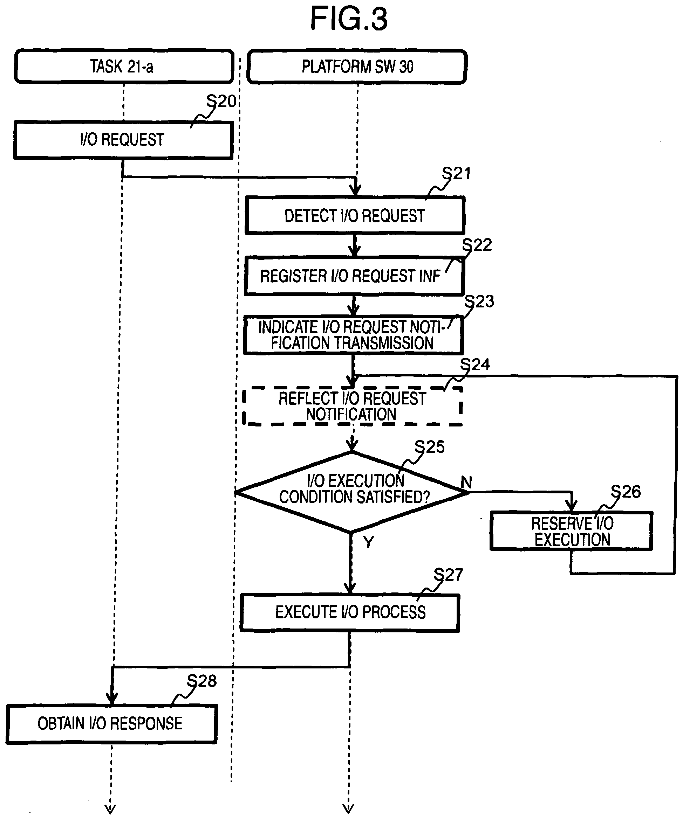

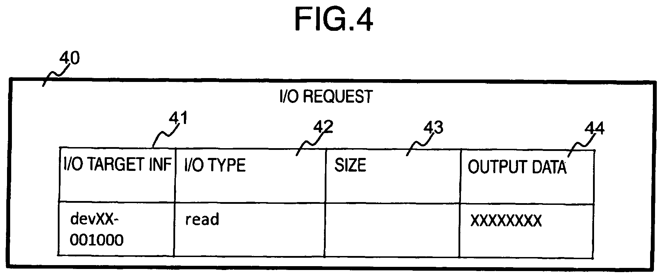

FIG. 3 shows operations of the task 21-a and the platform software 30 when the processor 12 executes input/output processing as processing of the task 21-a. The input/output described here is, for example, a read/write operation for a particular area in the task shared storage 37 or the storage 13 and communication with a device outside the FT system 1 by use of the external communication interface 14. In the task 21, the input/output processing is described as an issuance of an input/output request 40 to the request receiving process 38 (S20). As FIG. 4 shows, the input/output request 40 at least includes input/output target information (inf) 41 including information pieces such as an input/output target and an address in the target according to necessity, an input/output type 42 requested by the input/output request 40, and the size 43 of data for which the input/output is conducted; and further output data 44 only if the input/output request 40 is associated with an output.

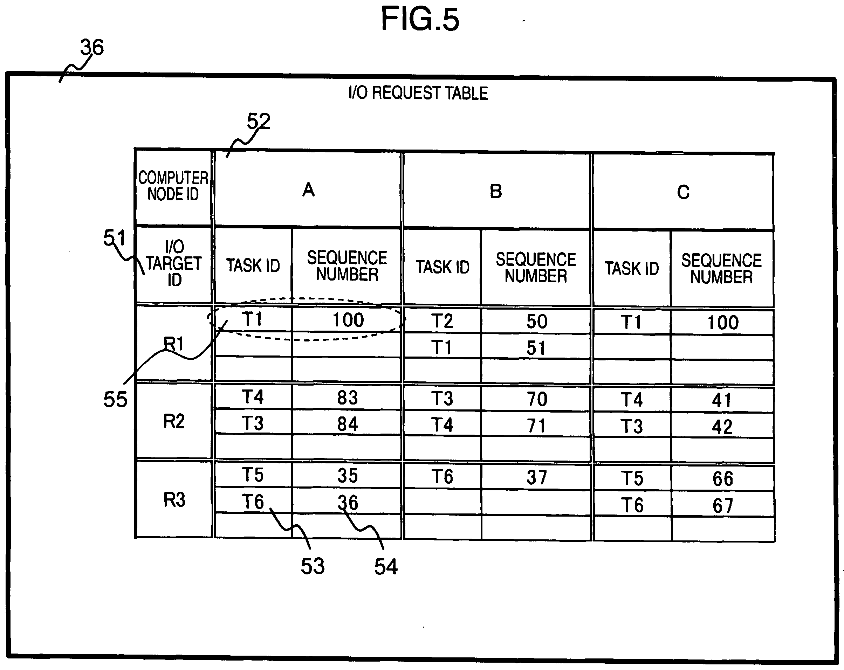

The processor 12 detects the input/output request 40 by the input/output request detection process 32 (S21) and then registers input/output request information 55 to the input/output request table 36 (S22). The input/output request table 36 is commonly used in the computer node 10 such that each processor 12 in the same computer node 10 updates and refers to the same input/output request table 36. As FIG. 5 shows, the input/output request table 36 at least includes an input/output target ID (identifier) 51, a computer node ID 52, a task ID 53, and a sequence number 54. The input/output target ID 51 is a code uniquely determined and assigned based on the input/output target information 41, for an input/output target position and an interface and an address thereon which are describable in the input/output target information 41, for each unit which can be a target of an access at a time. For example, an input/output target ID 51 represents a particular area in the task shared storage 37 and a second input/output target ID 51 represents one of the external communication interfaces 14. The sequence number 54 is a sequence number assigned to the input/output request information 55 to be registered to the input/output request table 36 on the computer 10, for each input/output request information 55 having the same input/output target ID 51. For an input/output request information pieces 55 related to the different input/output targets ID 51, the sequence numbers 54 are not associated with each other.

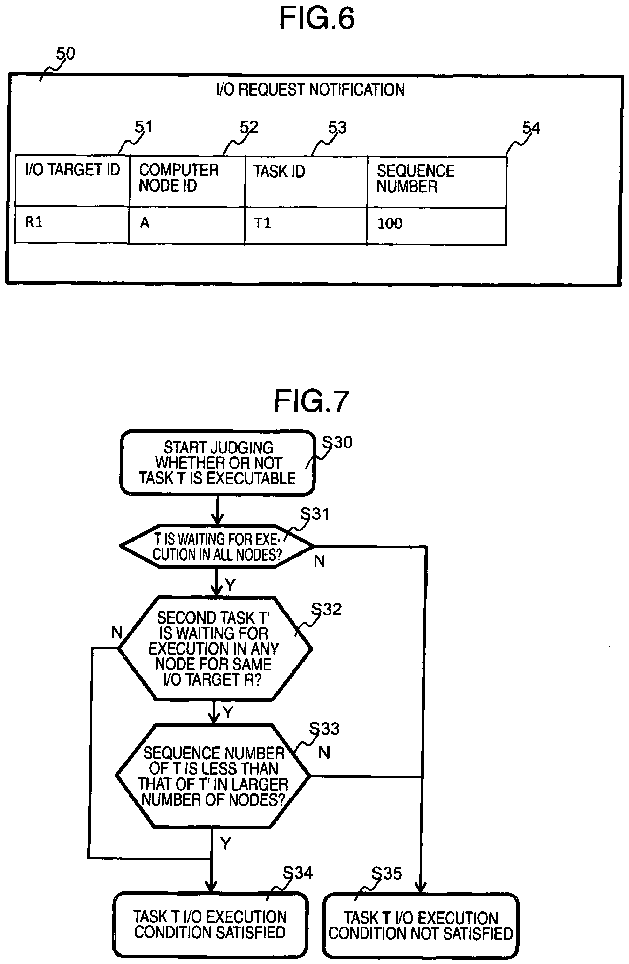

Also, the processor 12 instructs, in the inter-node communication process 35, the inter-node communication interface 15 to transmit an input/output request notification 50 shown in FIG. 6 to a second communication node 10 (S23). The inter-node communication interface transmits the input/output request notification 50 to all computer node 10 in the fault tolerant system 1. Further, the processor 12 receives, in the inter-node communication process 35, an input/output request notification 50 from a second computer node 10 and then updates the input/output request table 36 based thereon (S24). A particular processor 12 in the computer node 10 may conduct the reception of the input/output request notification 50 and the update of the input/output request table 36 in an asynchronous manner with respect to the tasks 12.

The processor 12 conducts the judgment, in the input/output determination process 33, to determine whether or not the input/output execution condition is satisfied (S25); and reserves execution of the input/output so long as the condition is not satisfied (S26). During this period of time, the processor 12 may execute a second task.

Various methods are considerable for the judgment to determine whether or not the input/output execution condition is satisfied; hence, one kind thereof will be here described, and other methods will be respectively described as the second and subsequent embodiments. In conjunction with the present embodiment, description will be given of an example of a situation in which three computer nodes having computer node IDs A, B, and C, i.e., computer nodes 10-A, 10-B, and 10-C synchronously operate in the fault tolerant system 1.

It has been already described that the respective computer nodes mutually transfer an input/output request notification 50 to update the input/output request table 36. Based on this, the processor 12 executes the flow shown in FIG. 7, by referring to the input/output request table 36 in its own communication node 10, to determine whether or not the input/output execution condition is satisfied.

First, whether or not an input/output request of a task T as the judge target is waiting for execution in all computer nodes, namely, whether or not the input/output request information 55 including the task ID 53 equal to the task ID 53 of the task T is present in the input/output request table 36 for all computer node IDs 52 is judged (S31). In a situation in which this condition is not satisfied; for example, the task having the task ID T2 in FIG. 5 determines, since there exists a computer node not capable of executing the input/output request, that the execution condition is not satisfied naturally on the computer nodes 10-Aand 10-C as well as on the computer node 10-B (S35). In a situation in which the input/output request of the task T is waiting for execution on all computer nodes; for the same input/output target R, it is judged to determine whether or not there exists a second task T' waiting for input/output execution like T in a second computer node 10 in the fault tolerant system, that is, it is judged to determine whether or not there is any input/output request information 55 having the same input/output target ID 51 and the different task ID 53 in the input/output request table 36 (S32). In a situation in which the task T' described above is absent, the input/output request is only one input/output request executable on all computer nodes for the input/output target R; hence, the execution condition is satisfied for the task T (S34).

When T' is present, if the execution sequence of T and T' varies for each computer node 10, there appears the difference in operation between the computer nodes 10; hence, it is required to match the operation sequence between the computer nodes 10. For this purpose, for each T' satisfying the condition, which one of T and T' appears earlier in the input/output request table 36 is determined for each computer node 10. That is, for a plurality of input/output request information pieces 55 having the same input/output target ID 51 and the same computer node ID 52, the sequence number 54 of the input/output request information 55 of T is compared with that of the input/output request information 56 of T' to determine which one of the sequence numbers is larger. In a situation in which the input/output request information of T' is absent for a particular computer node, it is assumed that the sequence number 54 of T is less than that of T'. Hereinbelow, in the present embodiment and other embodiments, the appearance sequence of the task 21 in the input/output request table 36 is determined by similarly comparing the sequence numbers with each other. For an arbitrary T', if the number of nodes 10 in which T' appears earlier than T is larger, that is, if the number of nodes 10 for which (sequence number 54 of T) > (sequence number 54 ofT') in the input/output request table 36 is larger than the number of nodes 10 for which (sequence number 54 of T) < (sequence number 54 of T'), it is assumed that T' is to be executed with higher priority as compared with T. In this situation, since there exists the task T' to be executed with higher priority as compared with T, the execution condition is not satisfied for T (S35). For example, when judging the execution condition of a task having the task ID T3 in FIG. 5, the task having the task ID T4 appears earlier than the task having the task ID T3 in the computer node C; hence, the execution condition is not satisfied for T3. Contrarily, when there exists no task T' satisfying the condition above, the execution condition is not satisfied for T (S34). For example, the execution condition is satisfied for the task having the task ID T4 in FIG. 5. Incidentally, if the numbers of computer nodes 10 which lead to the different judge results is equal to each other for each judge result; there may be employed a method in which for example, a set including a particular computer node 10 is treated as the majority, to set a judge condition such that the majority is uniquely determined. This judge criterion in the situation in which the numbers of computer nodes are equal to each other applies to each determination processing in which the numbers of compute nodes are compared with each other in the present invention.

If the condition is satisfied, the input/output processing is executed in the input/output execution process 34 (S27). The input/output execution process 34 is a read/write operation for a particular area in the task shared storage 37 or the storage 13; or, a transmission request to the external communication interface 14 or an acquisition request thereto for the received contents. The input/output execution process 34 may request a second processor 12 to conduct the execution or may execute a second task 21 until the processing is terminated.

According to the method described above, in all computer nodes 10, it is possible to synchronously execute, between the computer nodes 10, the input/output processing which influences a device outside the computer 10 or other tasks 21.

### ---- SECOND EMBODIMENT ----

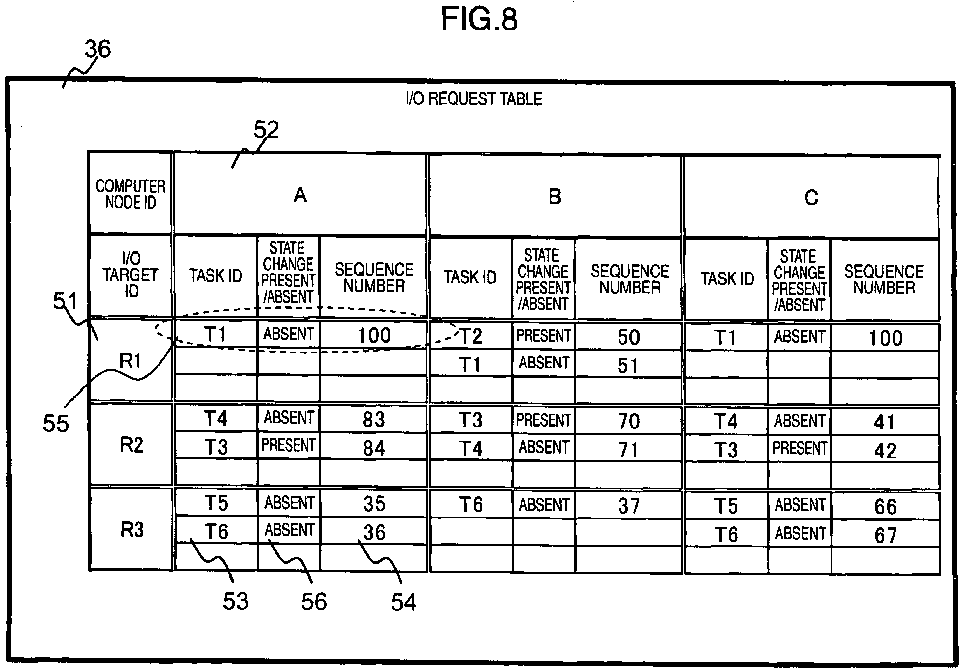

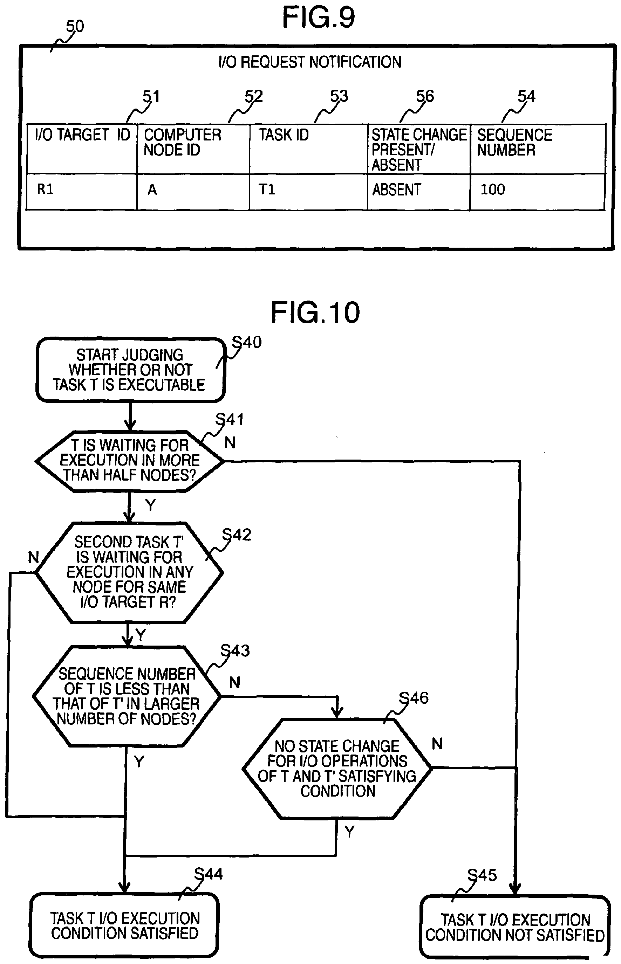

As for the second embodiment, description will be given of a configuration in which the task execution condition according to the flow shown in FIG. 7 is mitigated to more efficiently conduct task execution. In this method, in place of the input/output request table 36 and the input/output request notification 50 shown in FIGS. 5 and 6, those respectively shown in FIGS. 8 and 9 are employed and in place of the flow shown in FIG. 7, that shown in FIG. 10 is used.

In the present embodiment, the input/output request table 36 and the input/output request notification 50 include state change presence/absence information 56. The state change presence/absence information 56 is information to indicate whether or not a state change takes place when the input/output request is executed. For example, for the read request from the storage 13 and the task shared storage 37, no state change takes place; and for the write request, the state change takes place. Further, as for the send/receive request for the external communication interface 14, the state change is assumed to take place naturally for the transmission, and also for the reception if the state of the internal buffer of the external communication interface 14 changes. The state change presence/absence information 56 is set, at input/output request information registration (S22) and indication for input/output request notification transmission (S23) in the flow of FIG. 3, based on the input/output target information 41 and the input/output type 42 of the input/output request 40.

In the present embodiment, the flow of FIG. 10 is employed as the determination method of the input/output execution condition. The present embodiment differs from the first embodiment in that the system does not wait for a state in which all computer nodes 10 are waiting for execution of an input/output request and that the execution sequence is changed between the input/output requests not associated with a state change. First, whether or not an input/output request of the task T as the determination target is waiting for execution in more than half of the computer nodes is judged, that is, a judgment is conducted to determine whether or not input/output request information 55 having the task ID 53 equal to the task ID 53 of the task T appears for more than half of the computer node IDs 52, in the input/output request table 36 (S41). Next, whether or not there exists a second task T' waiting for execution for the same input/output target is judged as in the first embodiment (S42). If T' is present, as in the first embodiment, which one of T and T' appears in the input/output request table 36 is determined based on the sequence number 54 (S43). However, if T is not present for a computer node 10, it is assumed that T' appears earlier regardless of the presence or absence of appearance of T'. If T has the highest priority as a result of the judgment, it is determined that the execution condition is satisfied for the task T as in the first embodiment. For example, in the input/output request table 36 of FIG. 8, for the task with the task ID T5 for the input/output target with the input/output target ID R3, no input/output request has appeared in the computer node 10-B in the first embodiment; hence the execution condition is not satisfied; however, the execution condition is satisfied in the present embodiment. In the situation in which the second task T' has the highest priority, distinct from the first embodiment, the state change presence/absence 56 is referred to for T and T' to judge whether or not the input/output requests of these tasks are associated with a state change (S46). If no state change takes place at all, it is determined that the execution condition is satisfied for T (S44). For example, in the input/output request table 36 of FIG. 8, the task with the task ID T6 for the input/output target with the input/output target ID R3 satisfies the condition of S44; hence, the execution condition is satisfied. If T is associated with a state change or if either one T' is associated with a state change, it is determined that the execution condition is not satisfied for T (S45). For example, since the task with the task ID T3 for the input/output target with the input/output target ID R2 is associated with a state change, it does not satisfy the condition of S44; hence, the execution condition is not satisfied.

As described above, in the second embodiment, when an operation of a particular task delays on a small number of computer nodes 10 or when there appear a large number of input/output requests not associated with a state change, it is possible to execute tasks without delay as compared with the first embodiment.

### ---- THIRD EMBODIMENT ----

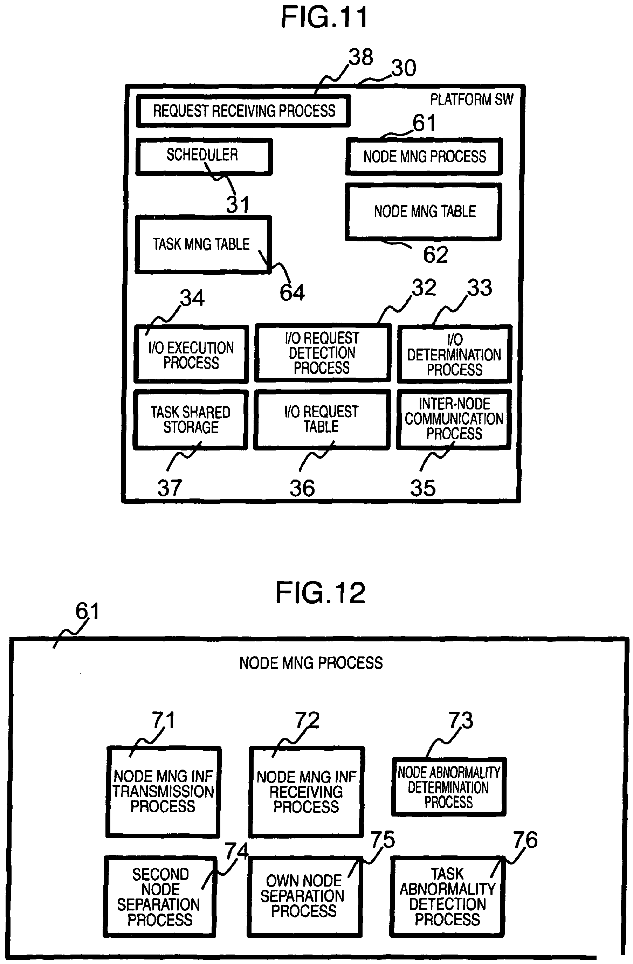

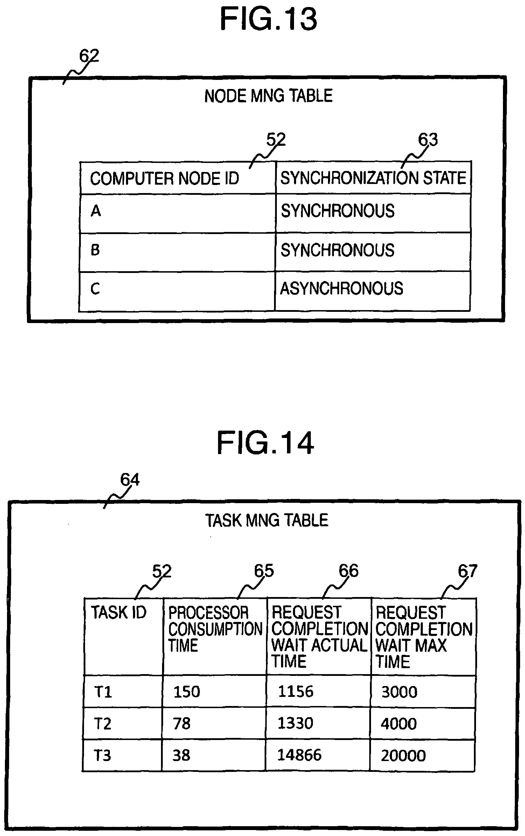

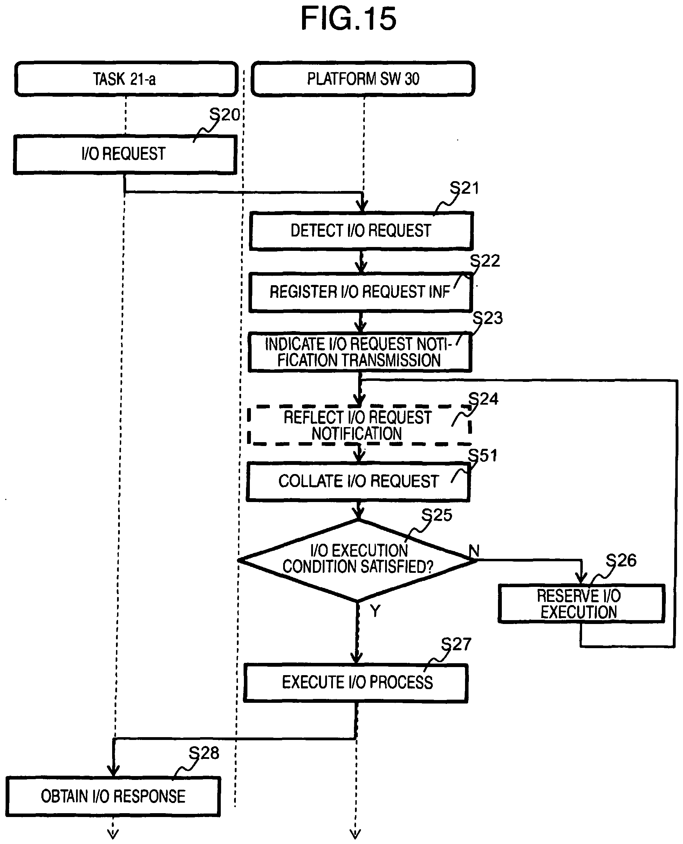

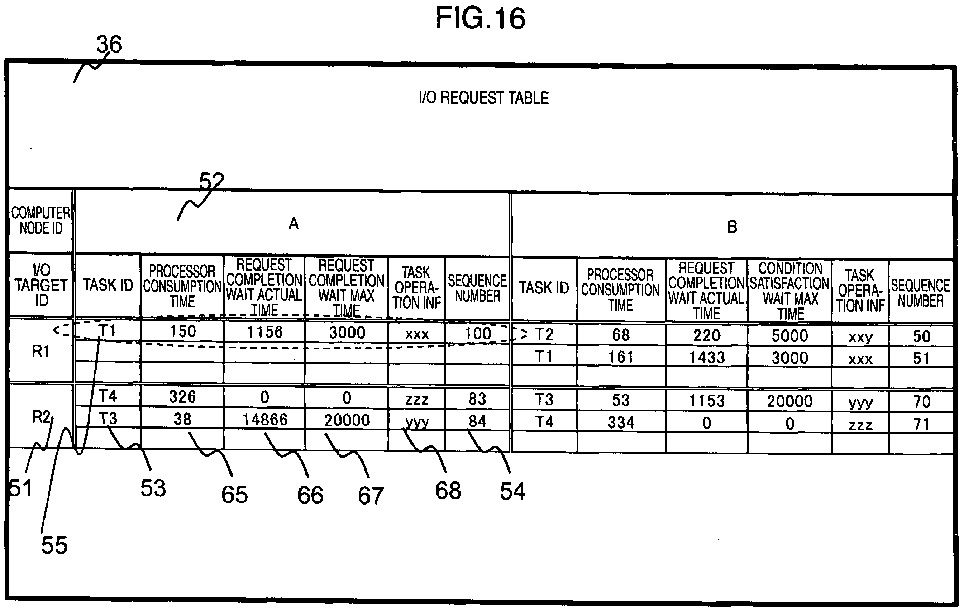

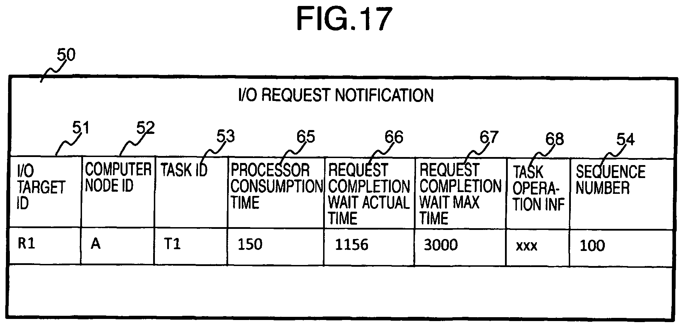

The third embodiment, as compared with the first embodiment, implements a method to detect and to separate an event in which an abnormality occurs in part of the computer nodes 10 constituting the fault tolerant system 1. In this method, the platform software 30 of FIG. 1 is replaced by that shown in FIG. 11; node management (mng) process 61 shown in FIG. 12, a node management table 62 shown in FIG. 13, and a task management table 64 shown in FIG. 14 are added to the platform software 30; a flow of FIG. 15 is used in place of the flow of FIG. 7; and in place of the input/output request table 36 and the input/output request notification 50 shown in FIGS. 5 and 6, those shown in FIGS. 16 and 17 are employed.

In this method, it is implemented that existence is monitored using a heartbeat among the computer nodes 10, the difference in task operation is detected through comparison and collation of the input/output request information 55, and a time-out of task operation is detected by assigning task time estimated information to the input/output request information. The present embodiment will be described as an extension of the first embodiment for simplicity; however, it may also be combined with the second embodiment.

In the third embodiment, the platform software 30 additionally includes the node management process 61, the node management table 62, and the task management table 64. The node management process 61 at least includes computer node management information transmission process 71 to instruct the inter-node communication process 35 to transmit an existence monitor packet, computer node management information receiving process 72 to periodically instruct the inter-node communication process 35 to receive an existence monitor packet, based on arbitrary process in the platform software 30; and computer node abnormality determination process 73 to determine an abnormal state for a computer node 10 as a transmission source if no existence monitor packet is received for a predetermined period of time. The computer node management information transmission process 71, the computer node management information receiving process 72, and the computer node abnormality determination process 73 are periodically executed by an arbitrary processor 12 on each computer node 10. Further, the node management process 61 includes second computer node separation process 74 to reflect, based on an abnormality detected by the computer node abnormality determination process 73 or any other platform software 30, the abnormality in the node management table 62; own computer node separation process 75 to instruct the inter-node communication interface 15 to transmit a separation execution notification for a second computer node 10 and to reflect the condition in the node management table 62; and task abnormality detection process 76 to collate the task management table 64 with the input/output request table 36, to thereby detect an abnormality of a task.

The node management table 62 indicates, for each computer node 10 in the fault tolerant system 1, whether or not it is in a synchronous operation. The node management table 62 at least includes, as FIG. 13 shows, a computer node ID 52 and synchronization state information 63. In the input/output determination process 33 and the inter-node communication process 35, only the computer node 10 for which "synchronous state" is described in the synchronization state information 63 is regarded as a target of the communication and input/output determination. Further, the second computer node separation process 74 by the node management process 61 conducts, for the item of the node ID 52 corresponding to the target computer node 10 in the node management table 62, a rewrite operation to set "asynchronous state" to the synchronization state information 63.

The task management table 64 indicates, for each task on the computer node 10, the quantity of processing executed by the task after the previous input/output request. The task management table 64 at least includes in addition to the task ID 52, as FIG. 14 shows, processor consumption time information 65, a request completion wait actual time 66, and a request completion wait maximum time 67. These items are respectively the total of time consumed, for the task 21, by the processor 12 to execute processing after the previous input/output request; the total of time for which operation is reserved due to the request completion wait S 15 for the task 21; and the total of maximum estimation value of time to be required by the request completion, estimated at occurrence of the request completion wait S15 for each kind of the target request. The processor 12 conducts, at execution of the scheduler 31 and the request receiving process 38, an addition of the time for which the task operates to the processor consumption time information 65 in the former situation, and an addition of the time required to execute the request to the request completion wait actual time 66 and an addition of the maximum estimation time associated with the contents of the request to the request completion wait maximum time 67 in the latter situation. Further, the task management table 64 may include task operation information 68 which is information to conduct collation to determine whether or not the task operations match each other on the respective computer nodes 10.

In the present embodiment, when an input/output request takes place in the task 21, the processor 12 executes the flow shown in FIG. 15. Since this flow is similar to the flow of the first embodiment shown in FIG. 3, only the difference will be described. First, at registration of input/output request information (S22) and at indication of input/output request notification transmission (S23), the processor 12 refers to the processor consumption time information 65, the request completion wait actual time 66, and the request completion wait maximum time 67 for the task 21-a in the task management table 64 and then sets these items respectively to the input/output request table 36 (FIG. 16) and the input/output request notification 50 (FIG. 17). Further, the processor 12 compares, in the input/output request collation (S51), the input/output request information 55 of the own computer node 10 with the input/output request information 55 of a second computer node 10. For the input/output request information 55 which has the same task ID 53 and in which the computer node ID 52 is other than that of the own computer node, that is, for the information regarding an input/output request executed by the same task 21 on a second computer node, the processor 12 judges to determine whether or not at least the input/output target IDs 51 match each other. If there exists, in addition to the input/output target ID 51, information useful to judge whether or not the task 21 conducts a similar operation between the computer nodes 10, for example, the state change presence/absence information 56 included in the input/output request information 55 in the second embodiment, such information may also be set as a target for the judgment of the matching state. In addition, in the input/output request notification 50 and the input/output request table 36, it is also possible to include information of the input/output target information 41, the input/output type 42, the size 43, and the output data 44 itself of the input/output 40 shown in FIG. 4 or information of a hash value of the output data 44 in the input/output request notification as the task operation information 68, to be used as the target for the judgment of the matching state. If a mismatching state occurs in the judgment, for each set including computer nodes 10 with equal task operation information, the processor 12 compares the number of computer nodes belonging to the set, to select a set which becomes the majority. If the own computer node 10 does not belong to the majority set, the processor 12 executes the own computer node separation process 75 of the node management process 61.

The node management process 61 includes the task abnormality detection process 76 for a task 21 on the own computer node 10 based on the input/output request table 36 and the task management table 64. The abnormality detection here is detection, for a task 21, of operation delayed or halted on the own computer node 10 as compared with a second computer node 10. An arbitrary processor 12 on the computer node 10 executes the task abnormality detection process 76. First, on the task management table 64, for the input/output request information 55 appearing only for a second computer node 10, the processor 12 compares it with information regarding an associated task on the task management table 64. That is, for a task having a task ID 53 equal to the task ID 53 in the input/output request information 55 satisfying the condition, the processor 12 acquires the processor consumption time 65, the request completion wait actual time 66, and the request completion wait maximum time 67 from the input/output request table 36 and then compares the information with the information on the task management table 64. As a result of the comparison, in a situation in which the processor consumption time 65 of the task 21 on the own computer node is larger, by at least a predetermined value, than the processor consumption time 65 of any other computer node 10, if the request completion wait actual time 66 of the task 21 on the own computer node is larger, by at least a predetermined value, than the request completion wait maximum time 67 of any other computer node 10, the processor 12 determines occurrence of an abnormality in the task 21. When the processor 12 determines occurrence of an abnormality, it executes the own computer node separation process 75.

As described above, in the third embodiment, in a situation in which a particular computer nodes 10 halts operation, when mismatching of task operation occurs on a particular computer nodes 10 with respect to a second computer node 10 or when the task operation delays with respect to a second computer node 10, it is possible that the computer node 10 is separated from the fault tolerant system 1, to thereby continue operation.

### ---- FOURTH EMBODIMENT ----

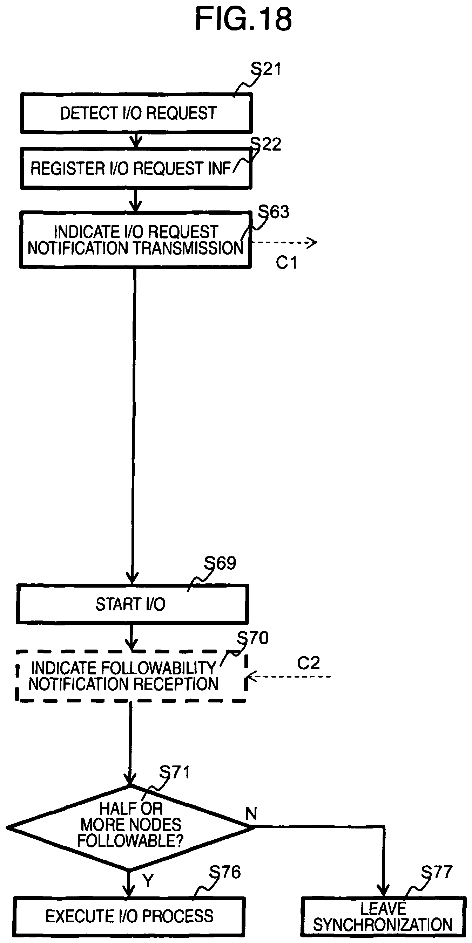

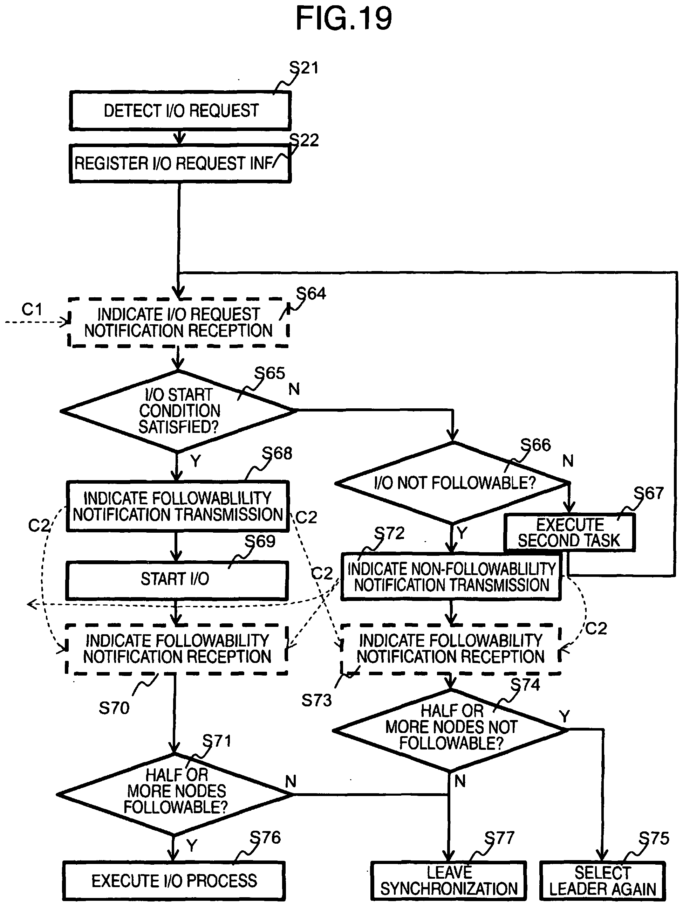

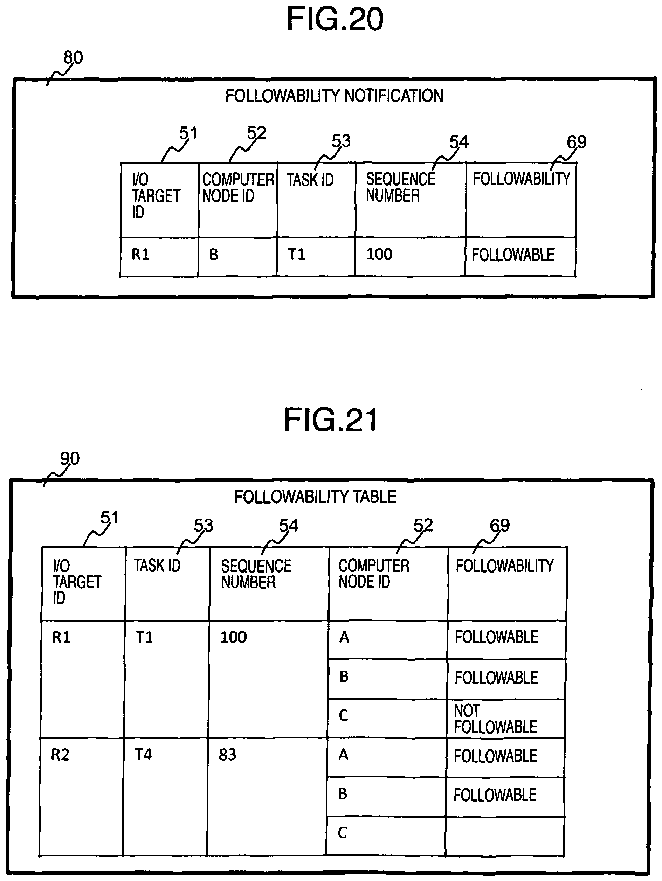

In the fourth embodiment, in a situation in which a long period of time lapses from the start of input/output processing to the execution of input/output in the input/output execution process 34, synchronization is established among the computer nodes 10 by use of the period of time to thereby mitigate the overhead at input/output. This operation will be described by use of the flowcharts of FIGS. 18 and 19 and the contents of communication and data formats of FIGS. 20 and 21.

In the present embodiment, one of the computer nodes 10 constituting the fault tolerant system 1 is assumed as a leader and others are assumed as followers. The leader executes, in principle, input/output operations by its own judgment, and the followers execute the input/output operations in the same sequence as for the leader. However, when half or more of followers determine "not followable" and transfer the condition to the leader, the leader is separated from the fault tolerant system 1, to continue the processing by the remaining computer nodes 10. For this purpose, the platform software 30 at least includes, in addition to the configuration of the first embodiment, the node management table 62 described in conjunction with the third embodiment and a followability table 90 shown in FIG. 21.

In the present embodiment, the flow from the input/output request detection to the input/output processing execution in the platform software 30 is as shown in FIG. 18 for the leader and as shown in FIG. 19 for the followers. During the period of time, between the leader and the followers, communications are conducted in the sequence of transmission of an input/output request notification (C1 in the flows of FIGS. 18 and 19) from the leader to all followers and transmission of a followability notification (C2 in the flows of FIGS. 18 and 19) from each follower to the leader and to the other followers. First, operation of the leader will be described by referring to FIG. 18.

In the leader, the operation in which the processor 12 detects an input/output request in the input/output request detection process 32 (S22) and then registers the condition to the own input/output request table 36 (S22) is the same as for the first and second embodiments. Next, in the inter-node communication process 35, the processor 12 indicates transmission of an input/output request notification (S63, C1). On the computer node 10 of the leader having started the input/output (S69), the processor 12 indicates, in the inter-node communication process 35, the inter-node communication interface 15 to concurrently receive a followability notification 80 from the followers. At reception of the followability notification 80 (C2), the processor 12 registers it to the followability table 90 shown in FIG. 21. Thereafter, immediately before actual processing of the input/output processing, the processor 12 reserves the operation of the task 21 until the number of the units including the leader and the followable computer nodes 10 in the followability table 90, that is, the value obtained by adding one to the number of computer nodes 10 from which the followability notification 80 of "followable" is received indicates the majority or the number of the computer nodes 10 which are not followable indicates the majority. Here, the actual processing of the input/output processing is processing which imposes influences onto a second task 21 and/or a device outside the system, for example, processing in which the contents are written to be changed in the task shared storage 37 or the storage 13, processing in which the contents of the shared storage 37 or the storage 13 are copied, or data acquisition and data transmission execution processing for the inter-node communication interface 15. When the number of computer nodes 10 which are followable or the number of computer nodes 10 which are not followable exceeds a predetermined value, the processor 12 judges which one group of computer nodes indicates the majority (S71); and if the number of units including the leader and computer nodes 10 which are followable according to the followability notification 80 is larger, the processor 12 executes the actual processing of the input/output (S76). If the number of the computer nodes 10 which are not followable according to the followability notification 80 is larger, the processor 12 executes "leaving from synchronization" as in the third embodiment (S77).

Next, the operation of the followers will be described by referring to FIG. 19.
As in the situation of the leader, the processor 12 detects an input/output request by the input/output request detection process 32 (S22) and registers the condition to the own input/output request table 36 (S22). Then, the processor 12 instructs the inter-node communication process 35 to receive (C1) an input/output request notification from the leader (S64). Next, in the input/output determination process 33, the processor 12 judges to determine whether or not the input/output start condition is satisfied (S65). Here, the input/output start condition is whether or not an input/output request notification has been received from the leader for the pertinent task 21, that is, whether or not there exists the input/output request information 55 having the same task ID 53 and the computer node ID 52 of the leader in the input/output request table 36. If the input/output start condition is satisfied, the processor 12 instructs the inter-node communication process 35 to notify (C2) "followable" to the leader and the other followers by use of the followability notification 80 shown in FIG 20 (S68) and then starts the input/output (S69). If the input/output start condition is not satisfied, the processor 12 judges to determine whether or not it is possible to follow, as a follower, the input/output of the leader (S66). For example, the followable situation is a situation in which the execution of the input/output request has not been delayed for a predetermined period of time or more. In this situation, the processor 12 executes a second task (S67), issues the indication to receive an input/output request notification (S64), and judges again the input/output start condition (S65). On the computer node 10 on which the input/output is started (S69), the processor 12 indicates, in the inter-node communication process 35, the inter-node communication interface 15 to concurrently receive (C2) a followability notification 80 from a second follower. At reception of the followability notification 80, the processor 12 registers it to the followability table 90 shown in FIG. 21. Then, as in the case of the leader, immediately before actual processing of the input/output processing, the processor 12 reserves the operation of the task 21 until the number of the units including the leader and the followable computer nodes 10 in the followability table 90, that is, the value obtained by adding two to the number of computer nodes 10 from which the followability notification 80 of "followable" is received indicates the majority or the number of the computer nodes 10 which are not followable indicates the majority. When the number of computer nodes 10 which are followable or the number of computer nodes 10 which are not followable exceeds a predetermined value, the processor 12 judges to determine which one group of computer nodes indicates the majority (S71); and if the number of units including the leader and computer nodes 10 which are followable according to the followability notification 80 is larger, the processor 12 executes the actual processing of the input/output (S76). If the number of computer nodes 10 which are not followable according to the followability notification 80 is larger, the leader and the computer nodes 10 determined as "followable" with respect thereto conduct "leaving from synchronization" as in the third embodiment (S77).

If the follower determines that it is not possible to follow the input/output of the leader (S66), the processor 12 indicates, in the inter-node communication process 35, the inter-node communication interface 15 to transmit (C2) the followability notification 80 indicating "not followable" to the node leader and the other followers. Thereafter, as in the situation of the flow to start the input/output (S69), the processor 12 indicates the inter-node communication interface 15 to receive (C2) the followability notification 80 from the other followers. The operation in which the processor 12 reserves the processing until the number of computer nodes 10 which are followable in the followability table 90 or the number of computer nodes 10 which are not followable therein is equal to or more than a predetermined value; and then compares, when either number is equal to or more than a predetermined value, the number of the followable computer nodes 10 with that of the not followable computer nodes 10 (S74), is similar to S71. If the number of not followable computer nodes 10 including the own computer nodes 10 is smaller, the processor 12 executes the own node separation processing (S77); if the number of not followable computer nodes 10 is larger, the processor 12 again conducts selection of the leader among these computer nodes 10 (S75). The operation to again select the leader is conducted, for example, in a method using the sequence numbers assigned to all computer nodes 10 such that from the computer nodes 10 under consideration, one computer node 10 having the smallest sequence number is selected as the leader. After the leader is again selected, the new leader resumes operation beginning at S63 of the flow of FIG. 18 and the followers resume operation beginning at the input/output request notification receiving processing of S64.

As described above, in the fourth embodiment, one of the computer nodes 10 constituting the fault tolerant system 1 is assumed as the leader and the remaining computer nodes 10 are assumed as followers, and the leader starts an input/output without waiting for a response from the followers and confirms the response from the followers during the period of time which ends immediately before the input/output processing affects an external device or a second task, to thereby mitigate the overhead in the input/output.

As above, description has been given of the present invention by use of the first to fourth embodiments. The first embodiment implements the basic method of the fault tolerant system in which when a plurality of tasks concurrently operate and influence each other, it is possible to carry out synchronized processing with low overhead without using dedicated hardware. The second embodiment mitigates, when compared with the first embodiment, the execution wait due to the relationship of dependence among tasks. The third embodiment is implemented by adding, to the first embodiment, an arrangement to detect an abnormality in a computer node and/or in a task thereon, to thereby continue operation only by the normal computer nodes. In the fourth embodiment, as compared with the first embodiment, a method is devised to mitigate the collation wait of processing by assigning privilege to a particular computer node, to thereby mitigate overhead.

### REFERENCE SIGNS LIST

- 1: Fault tolerant system
- 2: Voter
- 3: Terminal
- 10: Computer node
- 11: Memory
- 12: Processor
- 13: Storage
- 14: External communication interface
- 15: Inter-node communication interface
- 20: Application
- 21: Task
- 30: Platform software
- 31: Scheduler
- 36: Input/output request table
- 37: Task shared storage
- 40: Input/output request
- 51: Input/output target ID
- 52: Computer node ID
- 53: Task ID
- 54: Sequence number
- 62: Computer node management table
- 64: Task management table
- 80: Followability notification
- 90: Followability table

## Claims

1. A computer (10-A) communicably connected to at least one other computer (10-B, 10-C), comprising a at least one processor (12), a memory (11), and an interface unit to communicate with the at least one other computer (15), wherein:
the at least one processor (12), when processing an input or output request in a task that the processor is executing;
transmits a request notification including an identifier (ID) of the computer, an ID of the task (53), and an ID of an access target of the request to the at least one other computer (10-B, 10-C);
receives from the at least one other computer a request notification transmitted by the at least one other computer;
stores, in the memory (11), contents of the request notification thus received;
compares, based on the contents of the request notification received from the at least one other computer and stored in the memory, the request that the processor is trying to process with the request that the processor of the at least one other computer is trying to process; and
determines whether or not processing of the request that the processor is trying to process is possible,
wherein the at least one processor (12), when comparing the request that the at least one processor is trying to process with the request that the at least one processor of the at least one other computer is trying to process,
determines whether or not an ID of a task equal to the ID of the task (53) that the at least one processor is executing has been received from each at least one other computer; and
determines, if there exists a second request which is trying to access an access target equal to an access target of the request that the at least one processor is trying to process, whether or not the at least one processor received the request notification of the second request after receiving the request and based on a result of the comparison (S33), the at least one processor determines whether or not to process the request (S34,S35)

2. The computer according to claim 1, wherein the at least one processor (12),
if an ID of a task equal to the ID of the task that the at least one processor is executing has been received from each at least one other computer and
if, among half or more of the units including the computer (10-A) and the other computers (10-B, 10-C), the second request which is trying to access an access target equal to an access target of the request that the at least one processor is trying to process occurred after the request,
processes the request.

3. The computer (10-A) according to claim 1, wherein the at least one processor (12),
if an ID of a task (53) equal to the ID of the task the at least one processor is executing has been received from half or more of the units including the computer (10A) and the other computers (10B, 10C), and
if no change occurs in the access target by the second request which is trying to access an access target equal to an access target of the request that the at least one processor is trying to process,
processes the request.

4. The computer (10-A) according to claim 1, wherein
further, a heartbeat signal is communicated between the computer and the at least one other computer;
in the request notification which the computer (10A) transmits to the at least one other computer (10B, 10C) and the request notification which the computer receives from the other computer, at least either one of a processor consumption time and a request completion wait time is further included; and
the at least one processor (12), if it is not possible to receive the heartbeat signal from a particular computer or if it is determined, based on contents of a request notification received from the particular computer, that the particular computer is not executing a task in synchronism with the at least one other computer, removes the request that at least one processor of the particular computer is trying to process from the comparison target, and
further indicates the at least one other computer to remove the request that the at least one processor of the particular computer is trying to process from the comparison target.

5. The computer (10-A) according to claim 1, wherein
further, if it is determined based on contents of a request notification transmitted from the computer (10A) to the at least one other computer (10B, 10C), that the at least one processor (12) is not executing a task in synchronism with the at least one other computer, the processor indicates the at least one other computer to remove the request that the at least one processor is trying to process from the comparison target.

6. The computer (10-A) according to claim 1, wherein
if the computer (10A) is a leader computer, the computer receives a followability notification from the at least one other computer (10B, 10C), and
the at least one processor, when a followability notification indicating "followable" is received from half or more of the at least one other computers (10B, 10C), processes the request that the at least one processor is trying to process.

7. The computer (10-A) according to claim 6, wherein
if the computer is a follower computer, the computer device determines, based on a request notification received from the leader computer, whether or not processing of the request that the at least one processor is trying to process is possible.

8. The computer (10-A) according to claim 7, wherein
the follower computer further transmits a followability notification to the leader computer; and
the processor (12) refers to the followability notification received from the other computer and continuously uses the leader computer as the leader computer if a followability notification indicating "followable"" has been received from a predetermined number or more of the computers.

9. The computer (10-A) according to claim 8, wherein the follower computer,
if a followability notification indicating "followable" has been received from the at least one other computers the number of which is less than the predetermined number, uses a computer other than the leader computer, as a new leader computer.

## Patentansprüche

1. Computer (10-A), der zur Kommunikation mit mindestens einem anderen Computer (10-B, 10-C) verbunden ist und mindestens einen Prozessor (12), einen Speicher (11) und eine Schnittstelleneinheit zur Kommunikation mit dem mindestens einen anderen Computer (15) umfasst, wobei:
der mindestens eine Prozessor (12) bei Verarbeitung einer Eingabe- oder Ausgabeanforderung in einem vom Prozessor ausgeführten Task:
eine Anforderungsbenachrichtung einschließlich einer Identifizierung (ID) des Computers, einer ID des Tasks (53) und einer ID eines Zugriffsziels der Anforderung an den mindestens einen anderen Computer (10-B, 10-C) sendet;
von dem mindestens einen anderen Computer eine von diesem ausgesandte Anforderungsbenachrichtigung empfängt;
im Speicher (11) einen Inhalt der so empfangenen Anforderungsbenachrichtigung speichert;
aufgrund des Inhalts der von dem mindestens einen anderen Computer empfangenen und im Speicher gespeicherten Anforderungsbenachrichtigung die Anforderung, die der Prozessor zu verarbeiten versucht, mit der Anforderung vergleicht, die der Prozessor des mindestens einen anderen Computers zu verarbeiten versucht; und
bestimmt, ob eine Verarbeitung der Anforderung, die der Prozessor zu verarbeiten versucht, möglich ist,
wobei der mindestens eine Prozessor (12) beim Vergleich der Anforderung, die er zu verarbeiten versucht, mit der Anforderung, die der mindestens eine Prozessor des mindestens einen anderen Computers zu verarbeiten versucht:
bestimmt, ob vom jeweiligen mindestens einen anderen Computer her eine ID eines Tasks empfangen wurde, die gleich der ID des Tasks (53) ist, den der mindestens eine Prozessor ausführt; und
wenn es eine zweite Anforderung gibt, die einen Zugriff auf ein Zugriffsziel versucht, das gleich einem Zugriffsziel der Anforderung ist, die der mindestens eine Prozessor zu verarbeiten versucht, bestimmt, ob der mindestens eine Prozessor die Anforderungsbenachrichtigung der zweiten Anforderung nach Empfang der Anforderung empfangen hat, wobei der mindestens eine Prozessor aufgrund eines Ergebnisses des Vergleichs (S33) bestimmt, ob er die Anforderung verarbeiten soll (S34, S35).

2. Computer nach Anspruch 1, wobei
der mindestens eine Prozessor (12):
wenn eine ID eines Tasks gleich der ID des Tasks, den der mindestens eine Prozessor ausführt, vom jeweiligen mindestens einen anderen Computer her empfangen wurde und
wenn bei der Hälfte oder mehr der den Computer (10-A) und die anderen Computer (10-B, 10-C) umfassenden Einheiten die zweite Anforderung, die einen Zugriff auf ein Zugriffsziel versucht, das gleich einem Zugriffsziel der Anforderung ist, die der mindestens eine Prozessor zu verarbeiten versucht, nach der genannten Anforderung auftritt,
die Anforderung verarbeitet.

3. Computer (10-A) nach Anspruch 1, wobei
der mindestens eine Prozessor (12):
wenn eine ID eines Tasks (53) gleich der ID des Tasks, die der mindestens eine Prozessor ausführt, von der Hälfte oder mehr der den Computer (10-A) und die anderen Computer (10-B, 10-C) umfassenden Einheiten her empfangen wurde und
wenn beim Zugriffsziel durch die zweite Anforderung, die einen Zugriff auf ein Zugriffsziel gleich einem Zugriffsziel der Anforderung, die der mindestens eine Prozessor zu verarbeiten versucht, keine Änderung auftritt,
die Anforderung verarbeitet.

4. Computer (10-A) nach Anspruch 1, wobei
zwischen dem Computer und dem mindestens einen anderen Computer ein Lebenszeichensignal kommuniziert wird;
in der Anforderungsbenachrichtigung, die der Computer (10-A) an den mindestens einen anderen Computer (10-B, 10-C) sendet und der Anforderungsbenachrichtigung, die der Computer von dem anderen Computer her empfängt, außerdem mindestens entweder eine Prozessorverbrauchszeit oder eine Anforderungsvollendungs-Wartezeit enthalten ist; und
der mindestens eine Prozessor (12) dann, wenn es nicht möglich ist, das Lebenszeichensignal von einem bestimmten Computer her zu empfangen, oder wenn aufgrund eines Inhalts einer vom bestimmten Computer her empfangenen Anforderungsbenachrichtigung bestimmt wird, dass der bestimmte Computer einen Task nicht synchron mit dem mindestens einen anderen Computer ausführt, vom Gegenstand des Vergleichs die Anforderung entfernt, die der mindestens eine Prozessor des bestimmten Computers zu verarbeiten versucht, und
außerdem den mindestens einen anderen Computer anweist, vom Gegenstand des Vergleichs die Anforderung zu entfernen, die der mindestens eine Prozessor des bestimmten Computers zu verarbeiten versucht.

5. Computer (10-A) nach Anspruch 1, wobei
wenn aufgrund des Inhalts einer Anforderungsbenachrichtigung, die von dem Computer (10-A) an den mindestens einen anderen Computer (10-B, 10-C) gesandt wird, bestimmt wird, dass der mindestens eine Prozessor (12) einen Task nicht synchron mit dem mindestens einen anderen Computer ausführt, der Prozessor außerdem den mindestens einen anderen Computer anweist, vom Gegenstand des Vergleichs die Anforderung zu entfernen, die der mindestens eine Prozessor zu verarbeiten versucht.

6. Computer (10-A) nach Anspruch 1, wobei
der Computer (10-A), wenn er ein Führungscomputer ist, eine Verfolgbarkeitsbenachrichtigung von dem mindestens einen anderen Computer (10-B, 10-C) erhält,
der mindestens eine Prozessor bei Empfang einer Verfolgbarkeitsbenachrichtigung, die "verfolgbar" angibt, von der Hälfte oder mehr der mindestens einen anderen Computer (10-B, 10-C) her, die Anforderung verarbeitet, die der mindestens eine Prozessor zu verarbeiten versucht.

7. Computer (10-A) nach Anspruch 6, wobei
der Computer, wenn er ein Folgecomputer ist, aufgrund einer Anforderungsbenachrichtigung, die von dem Führungscomputer her empfangen wird, bestimmt, ob eine Verarbeitung der Anforderung, die der mindestens eine Prozessor zu verarbeiten versucht, möglich ist.

8. Computer (10-A) nach Anspruch 7, wobei
der Folgecomputer außerdem eine Verfolgbarkeitsbenachrichtigung an den Führungscomputer sendet; und
der Prozessor (12) auf die vom anderen Computer her empfangene Verfolgbarkeitsbenachrichtigung Bezug nimmt und den Führungscomputer fortlaufend als Führungscomputer verwendet, wenn von einer vorbestimmten Anzahl oder mehr der Computer her eine Verfolgbarkeitsbenachrichtigung empfangen wurde, die "verfolgbar" angibt.

9. Computer (10-A) nach Anspruch 8, wobei
der Folgecomputer,
wenn von dem mindestens einen anderen Computer, von dem eine Anzahl vorliegt, die kleiner als die vorbestimmte Anzahl ist, her eine Verfolgbarkeitsbenachrichtigung empfangen wird, die "verfolgbar" angibt, als neuen Führungscomputer einen anderen als den genannten Führungscomputer verwendet.

## Revendications

1. Ordinateur (10-A) connecté de manière communicante avec au moins un autre ordinateur (10-B, 10-C) comprenant au moins un processeur (12), une mémoire (11) et une unité d'interface pour communiquer avec l'au moins un autre ordinateur (15), dans lequel :
l'au moins un processeur (12), lors du traitement d'une requête d'entrée ou de sortie dans une tâche que le processeur est en train d'exécuter ;
transmet une notification de requête comprenant un identifiant (ID) de l'ordinateur, un ID de la tâche (53) et un ID d'une cible d'accès de la requête à l'au moins un autre ordinateur (10-B, 10-C) ;
reçoit, de la part de l'au moins un autre ordinateur, une notification de requête transmise par l'au moins un autre ordinateur ;
stocke, dans la mémoire (11), le contenu de la notification de requête ainsi reçue ;
compare, sur la base du contenu de la notification de requête provenant de l'au moins un autre ordinateur et stocké dans la mémoire, la requête que le processeur tente de traiter avec la requête que le processeur de l'au moins un autre ordinateur tente de traiter ; et
détermine si le traitement de la requête que le processeur tente de traiter est possible ou non,
dans lequel l'au moins un processeur (12), lors de la comparaison de la requête que l'au moins un processeur tente de traiter avec la requête que l'au moins un processeur de l'au moins un autre ordinateur tente de traiter,
détermine si un ID de la tâche, égal à l'ID de la tâche (53) que l'au moins un processeur est en train d'exécuter, a été reçu ou non en provenance de chaque au moins un autre ordinateur ; et
détermine s'il existe une deuxième requête qui tente d'accéder à une cible d'accès égale à une cible d'accès de la requête que l'au moins un processeur tente de traiter, si l'au moins un processeur a reçu ou non la notification de requête après la réception de la requête et, sur la base d'un résultat de la comparaison (S33), l'au moins un processeur décide ou non de traiter la requête (S34, S35).

2. L'ordinateur selon la revendication 1, dans lequel l'au moins un processeur (12),
si un ID d'une tâche égal à l'ID de la tâche que l'au moins un processeur est en train d'exécuter a été reçue en provenance de chaque au moins un ordinateur et
si, parmi la moitié ou plus des unités comprenant l'ordinateur (10-A) et les autres ordinateurs (10-B, 10-C), la deuxième requête qui tente d'accéder à une cible d'accès égale à une cible d'accès de la requête que l'au moins un processeur tente de traiter est survenue après la requête,
traite la requête.

3. Ordinateur (10-A) selon la revendication 1, dans lequel l'au moins un processeur (12),
si un ID d'une tâche (53) égal à l'ID de la tâche que l'au moins un processeur est en train d'exécuter a été reçu en provenant de la moitié ou plus des unités comprenant l'ordinateur (10A) et les autres ordinateurs (10B, 10C) et
si aucun changement ne survient dans la cible d'accès par la deuxième requête qui tente d'accéder à une cible d'accès égale à une cible d'accès de la requête que l'au moins un processeur tente de traiter,
traite la requête.

4. Ordinateur (10-A) selon la revendication 1, dans lequel :
en outre, un signal de rythme cardiaque est communiqué entre l'ordinateur et l'au moins un autre ordinateur ;
dans la notification de requête que l'ordinateur (10A) transmet à l'au moins un autre ordinateur (10B, 10C) et la notification de requête que l'ordinateur reçoit en provenant de l'autre ordinateur, est en outre inclus au moins un temps de consommation de processeur ou un temps d'attente de complétion de requête ; et
l'au moins un processeur (12), s'il n'est pas possible de recevoir le signal de rythme cardiaque en provenance d'un ordinateur particulier ou s'il est détermine, sur la base du contenue d'une notification de requête reçue en provenance de l'ordinateur particulier, que l'ordinateur particulier n'est pas en train d'exécuter une tâche en synchronisation avec l'au moins un autre ordinateur, supprime la requête que l'au moins un processeur de l'ordinateur particulier tente de traiter à partir de la cible de comparaison et
demande en outre à l'au moins un autre ordinateur de supprimer la requête que l'au moins un processeur de l'ordinateur particulier tente de traiter à partir de la cible de comparaison.

5. Ordinateur (10-A) selon la revendication 1, dans lequel :
en outre, s'il est déterminé, sur la base du contenu d'une notification de requête transmise de l'ordinateur (10A) à l'au moins un autre ordinateur (10B, 10C), que l'au moins un processeur (12) n'est pas en train d'exécuter une tâche en synchronisation avec l'au moins un autre ordinateur, le processeur demande à l'au moins un autre ordinateur de supprimer la requête que l'au moins un processeur tente de traiter à partir de cible de comparaison.

6. Ordinateur (10-A) selon la revendication 1, dans lequel :
si l'ordinateur (10A) est un ordinateur leader, l'ordinateur reçoit une notification de suivabilité en provenance de l'au moins un autre ordinateur (10B, 10C), et
l'au moins un processeur, lorsqu'une notification de suivabilité indiquant « suivable » est reçue en provenance de la moitié ou plus des au moins un autre ordinateur (10B, 10C), traite la requête que l'au moins un processeur tente de traiter.

7. Ordinateur (10-A) selon la revendication 6, dans lequel :
si l'ordinateur est un ordinateur suiveur, l'ordinateur détermine, sur la base d'une notification de requête reçue en provenance de l'ordinateur leader, si le traitement de la requête que l'au moins un processeur tente de traiter est possible ou non.

8. Ordinateur (10-A) selon la revendication 7, dans lequel :
l'ordinateur suiveur transmet en outre une notification de suivabilité à l'ordinateur leader ; et
le processeur (12) se réfère à la notification de suivabilité reçue en provenance de l'autre ordinateur et continue d'utiliser l'ordinateur leader en tant qu'ordinateur leader si une notification de suivabilité indiquant « suivable » a été reçue en provenance d'un nombre prédéterminé ou plus d'ordinateurs.

9. Ordinateur (10-A) selon la revendication 8, dans lequel :
l'ordinateur suiveur,
si une notification de suivabilité indiquant « suivable » a été reçue en provenance de l'au moins un autre ordinateur, dont le nombre est inférieur au nombre prédéterminé, utilise un ordinateur autre que l'ordinateur leader en tant que nouvel ordinateur leader.
